(19) Europäisches Patentamt
European Patent Office
Office européen des brevets

(11) Publication number: **0 124 833**
**A1**

(12) # EUROPEAN PATENT APPLICATION

(21) Application number: 84104741.8

(22) Date of filing: 27.04.84

(51) Int. Cl.[3]: **C 08 K 5/37**
C 08 K 5/58, C 08 L 27/06

(30) Priority: **29.04.83 US 489881**

(43) Date of publication of application:
**14.11.84 Bulletin 84/46**

(84) Designated Contracting States:
**BE DE FR GB NL**

(71) Applicant: **PENNWALT CORPORATION**
**Pennwalt Building Three Parkway**
**Philadelphia Pennsylvania 19102(US)**

(72) Inventor: **Bohen, Joseph Michael**
**540 Norwyck Drive**
**King of Prussia Pennsylvania(US)**

(72) Inventor: **Reifenberg, Gerald Harvey**
**393 Dutch Neck Road**
**Hightstown New Jersey(US)**

(74) Representative: **Abitz, Walter, Dr.-Ing. et al,**
**Abitz, Morf, Gritschneder, Freiherr von Wittgenstein**
**Postfach 86 01 09**
**D-8000 München 86(DE)**

(54) **Heat stabilizers for halogenated resins.**

(57) A halogen-free stabilizer composition of an aliphatic mercaptan and at least one sulfur-containing organotin compound having a $-\overset{|}{\underset{|}{C}}-Sn-S-$ group therein is used as a component of a halogenated resin to provide stability against deterioration of the resin by heat. Up to 80% of the mercaptan of this composition can be replaced by an alkali or alkaline earth metal salt of a mercaptan or mercapto acid.

**EP 0 124 833 A1**

43 DE 56/489881

# Heat Stabilizers for Halogenated Resins

## Background of the Invention

This invention relates to stabilizer compositions containing an aliphatic mercaptan and at least one sulfur-containing organotin compound. More particulary, this invention relates to stabilizer compositions which are halogen free and which contain an aliphatic mercaptan and at least one sulfur-containing organotin compound wherein up to 80% by weight of the mercaptan can be replaced by an alkali or alkaline earth metal salt of a mercaptan or mercapto acid.

It is well known in the art that various halogen-containing resins, particularly vinyl halide polymers which include homopolymers and copolymers of vinyl chloride undergo deterioration of physical properties and color changes upon their exposure to heat during processing, particularly the processing into formed articles of commerce. Color changes which are undesirable occur during the early stages (e.g. within the first 5 to 20 minutes) of the elevated temperature processing that the polymer encounters in extruders, injection molding and blow molding machines, etc. This color change is often manifested in various degrees of yellowing of the polymer although other hues have also been observed. This development of color during the early stages of processing has received increasing attention in recent years and has become a significant consideration in the stabilization of halogen-containing polymers. However, there still remains considerable need for improvement of the early color inhibition performance of stabilizers for halogen-containing polymers.

U.S. Patent No. 4,360,619 discloses stablizer compositions containing at least 1 mercaptan-containing organic compound and at least 1 organotin compound, wherein the stabilizer compositions must contain 0.1% to about 10% by weight of a halogen based on the total weight of the stabilizer composition. These stabilizer compounds are used to stabilize halogen-containing polymers. In the examples,

infra, it has been shown that these halogen- containing stabilizers do not perform as well as the halogen-free stabilizers of the instant invention.

## Statement of the Invention

The present invention is directed to a composition for stabilizing halogen-containing resins consisting essentially of a mixture of (i) an aliphatic mercaptan and (ii) at least one sulfur-containing organotin compound having a $-\overset{|}{\underset{|}{C}}-Sn-S-$ group therein, with the proviso that up to 80% by weight of (i) can be replaced by an alkali or alkaline earth metal salt of a mercaptan or mercapto acid, wherein said composition has a weight ratio of (i) to (ii) ranging between 25:1 and about 1:20.

## Detailed Description of the Invention

The stabilizer composition (which is halogen-free) of the present invention has been found to stabilize halogen-containing polymers against heat degradation.

The mercaptans which are operable in this invention have the formula RSH (I)

where R is a hydrocarbon radical (e.g. alkyl or cycloalkyl) of 1-22 carbon atoms optionally substituted by -XH, $XR^1$, $-\overset{X}{\overset{||}{C}}-R^1$, $-X\overset{Y}{\overset{||}{C}}-R^1$, or $-\overset{Y}{\overset{||}{C}}-XR^1$ where $R^1$ is an alkyl of 1-20 carbons, alkenyl of 2 to 20 carbons, cycloalkyl of 3 to 20 carbons, aryl of 6 to 20 carbons or mixed alkyl-aryl group of

7-20 carbons and both X and Y are independently selected from oxygen (O) and sulfur(S).

The R group of formula I may be derived from a mercaptan, or a mercapto alcohol, or an ester of a mercapto alcohol or a mercaptoacid. Examples of suitable aliphatic mercaptans are those in which the R group is methyl, ethyl, propyl, butyl, amyl, hexyl, octyl, lauryl, hexadecyl, octadecyl, allyl, methallyl, cyclopentyl, cyclohexyl, or a substituted hydrocarbon radical such as 2-carbomethoxyethyl, cyanoethyl (of the type described in U.S. Pat. No. 3,471,538) and the like. Those aliphatic mercaptans having 8 to 18 carbons, e.g. decyl or dodecyl mercaptan, are usually preferred because the lower mercaptans are unsuitable for use on account of their offensive smell. Mercapto alcohols, 2-mercaptoethanol, 2-mercaptopropanol, 3-mercaptopropanol, thioglycerol, thiodiethylene glycol, and others may be mentioned. Particularly suitable are esters of mercapto alcohols in which the hydroxy groups are esterfied by an aliphatic, aromatic, or alicyclic saturated or unsaturated monocarboxylic acid. Readily available mercaptoacid esters are those of thioglycolic acid, such as ethyl thioglycolate, isooctyl thioglycolate, tridecyl thioglycolate and generally the esters of mono and dibasic aliphatic and aromatic mercaptoacids, such as esters of betathiopropionic acid, thiolactic acid, thiobutyric acid, mercaptolauric acid and mercaptosuccinic acid.

The sulfur-containing and organotin compounds of this composition have the following formula: $\underset{\substack{|\\ Z}}{R^2Sn}(SR)_a$ (II)

wherein: a is 1 or 2;

$R^2$ is a hydrocarbon radical selected from the group consisting of alkyl 1-8 carbons, cycloalkyl of 3-8 carbons, aryl of 6-8 carbons, and alkyl-aryl of 7-8 carbons wherein said hydrocarbon radicals may have a substituent selected from the group consisting of -CN,

$OR^3$, $-\overset{\overset{O}{\|}}{C}R^3$, or $-CO_2R^3$ where $R^3$ is an alkyl of 1-20 carbons, alkenyl of 2-20 carbons, or alkyl-aryl of 7-20 carbons;

R is as previously defined;

Z is O, S, $R^2$, SR, or $-(S)_b-Sn(R^2)_c(SR)_{3-c}$ where b is 1, 2, or 3 and c is 1 or 2.

Other organotin sulfur-containing compounds which are within the scope of this invention have the following formulas

$(R^2_dSnS_{4-d/2})_n$
(III)

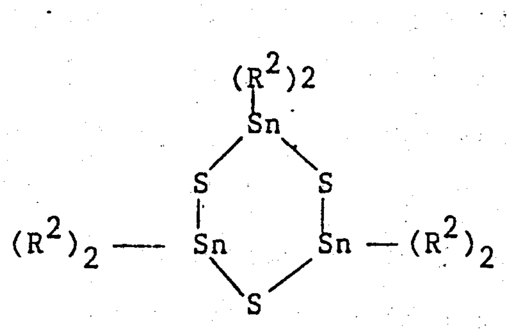

(IV)

wherein: $R^2$ is as previously defined.

d is 1 or 2, with the proviso that when d is 2, the organotin sulfides exist principally as cyclic trimers (IV), and n is 2 to about 1000.

All of the organotin sulfur-containing compounds of the present invention and methods of preparing them are known in the prior art.

The alkali or alkaline earth metal salts of mercaptans, which are used in this invention, are described in U.S. Patent 4,115,352, and have the following formulas:

$M(SR)_p$

V

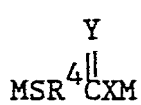

VI

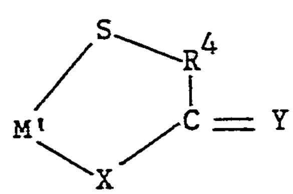

VII

wherein:

M is a group IA metal (an alkali metal in which case p=1) or a group IIA metal (an alkaline earth metal in which case p=2); M' is a group IIA metal; R is as previously defined; X and Y are independently selected from O and S, and $R^4$ is an alkylene linking group of 1-5 carbons (which may be part of a cyclic structure) and which may optionally be

substituted with halogen, XH, $XR^1$, $-X-\overset{X}{\overset{\|}{C}}R^1$, or $-\overset{Y}{\overset{\|}{C}}XR^1$ where $R^1$ is as previously defined.

The stabilizer composition of the present invention is useful as a component of a halogentated resin to provide stability against deterioration of the resin by heat; the stabilizer component can be used over a range of about 0.05 to about 10 phr (that is, parts by weight per 100 parts of halogenated resin). The preferred range is about 0.25 to about 5.0 phr. The chemical nature of the halogenated resin is not critical and typical suitable embodiments are disclosed in U.S. patent 4,115,352. Preferably the resin is a vinyl halide resin, specifically, a vinyl chloride resin.

The components of the stabilizer composition are generally combined in the weight of percent amounts as follows:

| wt% | |
|---|---|
| 5-90 | organotin sulfur containing compound |
| 2-95 | aliphatic mercaptan |
| 0-60 | alkali or alkaline earth metal salt of a mercaptan or mercaptoacid |
| 100 | |

The preferred ranges are as follows:

| wt % | |
|---|---|
| 5-90 | organotin sulfur containing compound |
| 5-95 | aliphatic mercaptan |
| 0-40 | alkali or alkaline earth metal salt of a mercaptan or mercaptoacid |
| 100 | |

EXAMPLES

In the following examples, fourteen organotin mercaptides were used: (I) methyltin tris(2-mercaptoethyl tallate), (II) butyltin tris(2-mercaptoethyl tallate), (III) dibutyltin bis(isooctyl 3-mercaptopropionate), (IV) dibutyltin bis(dodecyl mercaptide), (V) dioctyltin bis(isooctyl thioglycolate), (VI) dimethyltin bis(2-mercaptoethyl stearate), (VII) methyltin tris(2-mercaptoethyl stearate), (VIII) dibutyltin bis(isooctyl thioglycolate), (IX) monobutyltin tris(isooctyl thioglycolate), (X) dimethyltin bis(isooctyl thioglycolate), (XI) methyltin tris(isooctyl thiolglycolate), (XII) methyltin tris(2-mercaptoethyl nonoate), (XIII) dimethyltin bis(2-mercaptoethyl nonoate), and (XIV) dimethyltin bis(2-mercaptoethyl heptanoate).

Five embodiments of sulfur-bridged organotin mercaptides were used:

(XV)

$(CH_3)_2SnSCH_2CO_2C_8H_{17}$
|
S
|
$CH_3Sn(SCH_2CO_2C_8H_{17})_2$ ,

(XVI)

$(C_4H_9)_2SnSCH_2CO_2C_8H_{17}$
|
S
|
$C_4H_9S(SCH_2CO_2C_8H_{17})_2$ ,

(XVII)

$(CH_3)_2Sn(SCH_2CH_2O_2CC_{17}H_{35})$
|
S
|
$CH_3Sn(SCH_2CH_2O_2CC_{17}H_{35})_2$ ,

(XVIII)

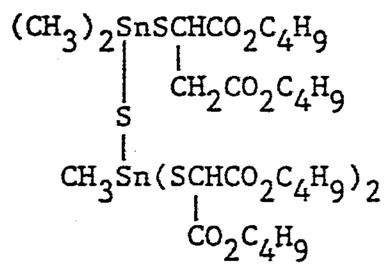

, and

(XIX)

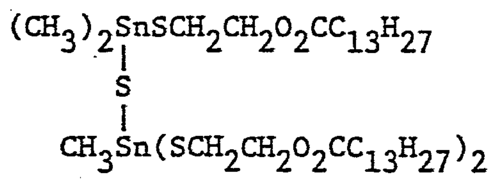

.

Four organotin sulfides were used: (XX) dibutyltin sulfide, (XXI) butyltin sesquisulfide, (XXII) methyltin sesquisulfide, and (XXIII) dimethyltin sulfide.

The aliphatic mercaptans used for illustrative purposes were (XXIV) isooctyl thioglycolate, (XXV) 2-mercaptoethyl tallate, (XXVI) isooctyl 3-mercaptopropionate, (XXVII) 2-mercaptoethyl stearate, (XXVIII) 2-mercaptoethyl myristate, (XXIX) 2-mercaptoethyl nonoate, (XXX) 2-mercaptoethyl heptanoate, (XXXI) dodecyl mercaptan, and (XXXII) dibutyl mercaptosuccinate.

Four embodiments of an alkaline earth metal salt of a mercaptan were used: (XXXIII) Barium bis-(2-mercaptoethyl myristate), (XXXIV) barium bis(isooctyl thioglycolate), (XXXV) Barium bis(2-mercaptoethyl tallate) and (XXXVI) Barium bis(2-mercaptoethyl stearate).

Three prior art halogen-containing tin compounds were also tested: (XXXVII) stannic chloride, (XXXVII) methyltin trichloride, and (XXXIX) dibutyltin dichloride.

Standard Procedure

In the examples, the above identified compounds are used in a standard formulation which contains 100 parts of a polyvinyl chloride homopolymer, 1.2 parts of a paraffin wax, 0.15 parts of an oxidized polyethylene wax, 0.6 parts of calcium stearate, 2.0 parts of calcium carbonate, 1.0 parts of titanium dioxide, and 0.5 parts of the stabilizer. All parts are by weight unless otherwise indicated.

The resin mixtures are dry blended in a Waring Commercial Blender. The resulting mixture is masticated in a Brabender at about 370°F. In examples 1 through 50 and 63 to 70, samples were withdrawn from the Brabender at three minute intervals. The discoloration of the sample was rated visually and recorded according to the following scale:

| | |
|---|---|
| White | 10 |
| | 9 |
| | 8 |
| Yellow | 7 |
| | 6 |
| | 5 |
| Orange | 4 |
| | 3 |
| | 2 |
| | 1 |
| Burn | 0 |

| Example No. | Stabilizer Composition Tin Component | RSH | Color Rating after Processing for 3 min. | 6 min. | 9 min. | 12 min. | 15 min. |
|---|---|---|---|---|---|---|---|
| 1 | - | XXV(100%) | 4 | 2 | 1 | | |
| 2 | I(100%) | - | 8 | 7 | 7 | 6 | 1 |
| 3 | I(80%) | XXV(20%) | 9+ | 9 | 8 | 8 | 7 |
| 4 | II(100%) | - | 9 | 8 | 7 | 5 | 2 |
| 5 | II(70%) | XXV(30%) | 10 | 10 | 9 | 8 | 7 |
| 6 | - | XXVI(100%) | 5 | 5 | 1 | | |
| 7 | III(100%) | - | 7 | 7 | 5 | 4 | 2 |
| 8 | III(60%) | XXVI(40%) | 8+ | 8 | 7 | 6+ | 5 |
| 9 | IV(100%) | - | 7 | 7 | 5 | 4 | 3 |
| 10 | IV(85%) | XXXI(15%) | 8 | 7 | 6 | 5 | 4 |
| 11 | - | XXIV(100%) | 4 | 3 | 2 | | |
| 12 | V(100%) | - | 7 | 6 | 5 | 4 | 2 |
| 13 | V(80%) | XXIV(20%) | 8 | 8 | 7 | 7 | 6 |
| 14 | XV(100%) | - | 10 | 10 | 9 | 9 | 8 |
| 15 | XV(75%) | XXIV(25%) | 10+ | 10 | 10 | 10 | 9 |
| 16 | - | XXVIII(100%) | 4 | 4 | 2 | | |
| 17 | XIX(100%) | - | 10 | 10 | 9 | 8 | 6 |
| 18 | XIX(67%) | XXVIII(33%) | 10 | 10 | 10 | 9 | 9 |
| 19 | XIX(70%), XXXIII(20%) | XXVIII(10%) | 10+ | 10 | 10 | 10 | 9 |
| 20 | II(84%), XX(16%) | - | 9 | 9 | 8 | 8 | 4 |
| 21 | II(67%), XX(13%) | XXV(20%) | 10 | 10 | 9 | 9 | 8 |
| 22 | - | XXVII(100%) | 4 | 4 | 1 | | |
| 23 | XXII(100%) | - | 9 | 9 | 8 | 7 | 6 |
| 24 | XXII(15%) | XXVII(85%) | 10+ | 10 | 10 | 10 | 9 |
| 25 | VI(46%), VII(43%) XXII(7%), XXIII(4%) | - | 10 | 10 | 9 | 8 | 7+ |

| | | | | | | | |
|---|---|---|---|---|---|---|---|
| 26 | VI(39%), VII(36%), XXII(6%), XXIII(3%) | XXVII(16%) | 10+ | 10 | 10 | 9 | 8 |
| 27 | VI(62%), VII(29%), XXII(9%) | - | 10 | 10 | 9 | 8 | 7 |
| 28 | XI(46%), VII(21%), XXII(7%) | XXVII(26%) | 10+ | 10 | 10 | 8 | 8 |
| 29 | XVI(100%) | - | 8 | 8 | 7 | 6 | 4 |
| 30 | XVI(77%) | XXIV(33%) | 9 | 8+ | 7+ | 6 | 4 |
| 31 | XVII(100%) | - | 8 | 7 | 7 | 5 | 4 |
| 32 | XVIII(65%) | XXXII(35%) | 9 | 8+ | 7+ | 6 | 4 |
| 33 | XVII(100%) | - | 10 | 10 | 9+ | 8 | 6 |
| 34 | XVII(70%) | XXVII(30%) | 10 | 10 | 10 | 9 | 7 |
| 35 | VIII(80%), IX(20%) | - | 8 | 7 | 6 | 4 | 4 |
| 36 | VIII(54%), IX(13%) | XXIV(33%) | 8+ | 7+ | 7 | 6 | 4 |
| 37 | VIII(54%), IX(13%), XXXIV(19%) | XXIV(14%) | 9 | 8+ | 7 | 7 | 6 |
| 38 | X(80%), XI(20%) | - | 9 | 8 | 7 | 6 | 5 |
| 39 | X(54%), XI(13%) | XXIV(33%) | 9+ | 9 | 8 | 7 | 6 |
| 40 | XIII(60%), XII(40%) | - | 10 | 10 | 9 | 9 | 8 |
| 41 | XIII(45%), XII(30%) | XXIX(25%) | 10+ | 10 | 10 | 9 | 8+ |
| 42 | VII(100%) | - | 10 | 9+ | 8 | 8 | 7 |
| 43 | VII(70%) | XXVII(30%) | 10 | 10 | 10 | 9 | 8 |
| 44 | XII(100%) | - | 10 | 10 | 9 | 8 | 7 |
| 45 | XII(67%) | XXIX(33%) | 10+ | 10 | 10 | 9 | 8 |
| 46 | - | XXX(100%) | 4 | 3 | 2 | | |
| 47 | XIV(100%) | - | 10 | 9 | 8 | 7 | 6 |
| 48 | XIV(69%) | XXX(31%) | 10 | 10 | 9 | 8 | 7 |
| 49 | XXI(100%) | - | 10 | 9 | 8 | 7 | 7 |
| 50 | XXI(25%) | XXVII(75%) | 10+ | 10 | 10 | 9 | 9 |

In all cases above, the addition of an aliphatic mercaptan to the organotin sulfur containing compound or a mixture of organotin sulfur-containing compounds clearly improved the early color inhibiting performance of the latter.

In examples 51 through 62 the dynamic heat stability (failure time), reported as the numbers of minutes from the point of polymer fusion to this onset of degradation, of various resin blends was determined on a Brabender at 370°F.

TABLE II

| Example No. | Stabilizer Composition: Tin Component | Stabilizer Composition: Aliphatic Mercaptan | Alkaline Earth Salt of a Mercaptan | Failure Time |
|---|---|---|---|---|
| 51 | XIX(100%) | - | - | 12 |
| 52 | XIX(67%) | XXVII(33%) | - | 14 |
| 53 | XIX(70%) | XXVII(10%) | XXXIII(20%) | 16 |
| 54 | II(84%), XX(16%) | - | - | 12 |
| 55 | II(67%), XX(13%) | XXV(20%) | - | 14 |
| 56 | II(67%), XX(13%) | XXV(10%) | XXXV(10%) | 17 |
| 57 | XVII(100%) | - | - | 11 |
| 58 | XVII(70%) | XXVII(30%) | - | 16 |
| 59 | XVII(70%) | XXVII(10%) | XXXVI(20%) | 19 |
| 60 | VII(80%), IX(20%) | - | - | 8 |
| 61 | VII(54%), IX(13%) | XXIV(33%) | - | 12 |
| 62 | VII(54%), IX(13%) | XXIV(13%) | XXXIV(20%) | 15 |

Examples 63 to 70 are comparative examples demonstrating the advantages of using halogen-free stabilizer compositions over using halogen-containing stabilizer compositions. These prior art stabilizer compositions are those taught by U.S. Patent No. 4,360,619.

TABELE III

| Example No. | Stabilizer Composition Thin Component | RSH | Color Rating after Processing for 3 min. | 6 min. | 9 min. | 12 min. | 15 min. |
|---|---|---|---|---|---|---|---|
| 63 | XII(65%), XXXVII(2%) | XXIX(33%) | 10 | 10 | 9 | 8 | 6 |
| 64 | Composition of Example 45 | | 10+ | 10 | 10 | 9 | 8 |
| 65 | XV(64%), XXXVIII(11%) | XXIV(25%) | 10 | 10 | 9 | 9 | 8 |
| 66 | Composition of Example 15 | | 10+ | 10 | 10 | 10 | 9 |
| 67 | II(50%), XXXIX(20%) | XXV(30%) | 9 | 7 | 6 | 5 | 3 |
| 68 | Composition of Example 5 | | 10 | 10 | 9 | 8 | 7 |
| 69 | VII(55%), XXXVII(10%) | XXVII(33%) | 8 | 7 | 0 | | |
| 70 | Composition of Example 43 | | 10+ | 10 | 10 | 9 | 8 |

WHAT IS CLAIMED:

1. A halogen-free stabilizer composition consisting essentially of (i) an aliphatic mercaptan and (ii) at least one sulfur-containing organotin compound having a $-\overset{|}{\underset{|}{C}}-Sn-S$ group therein, with the proviso that up to 80% of said mercaptan can be replaced by an alkali or alkaline earth metal salt of a mercaptan or mercapto acid, wherein said composition has a weight ratio of (i) to (ii) ranging between 25:1 and about 1:20.

2. The composition of Claim 1 wherein said aliphatic mercaptan is selected from a compound having the formula RSH wherein R is selected from an alkyl of 1-22 carbons or cycloalkyl of 3-22 carbons wherein the moiety may be substituted by a member selected from the group consisting of , -XH, $-XR^1$, $-\overset{X}{\overset{\|}{C}}R^1$, $-X\overset{Y}{\overset{\|}{C}}R^1$, and $-\overset{Y}{\overset{\|}{C}}-XR^1$ where $R^1$ is selected from an alkyl of 1-20 carbons, alkenyl of 2-20 carbons, cycloalkyl of 3-20 carbons, aryl of 6-20 carbons or alkyl-aryl of 7-20 carbons and both X and Y are independently selected from O or S.

3. The stabilizer composition of Claim 1 where said sulfur-containing organotin compound or mixture of organotin compounds are selected from components having the formula:

$$R^2\underset{\overset{|}{Z}}{Sn}(SR)_a \qquad \text{or}$$

$$(R^2SnS_{4-d/2})_n$$

wherein

a is 1 or 2,

$R^2$ is a hydrocarbon radical selected from group consisting of alkyl of 1-8 carbons, cycloaklyl of 3-8 carbons, aryl of 6-8 carbons, and alkyl-aryl of 7-8 carbons wherein the hydrocarbon radical can have a substituent thereon selected from the group consisting of -CN, $-OR^3$, $-\overset{O}{\overset{\|}{C}}R^3$, and $-CO_2R^3$ where $R^3$ is selected from an alkyl, of 1-20 carbons, alkenyl of 2-20 carbons, or alkyl-aryl of 7-20 carbons,

Z is selected from O, S, R, $R^2$, SR or $-(S)_bSn(R^2)_c(SR)_{3-c}$ where b is 1, 2 or 3 and c is 1 or 2,

d is 1 or 2, and

n is an integer of 2 to 1000.

4. The stabilizer composition of Claim 3 where in $R^2$ is selected from methyl, butyl or octyl; R is selected from the group consisting of:

$$-CH_2\overset{O}{\overset{\|}{C}}-OR^1 , \qquad -CH_2CH_2\overset{O}{\overset{\|}{C}}-OR^1 ,$$

$$-CH_2CH_2O\overset{O}{\overset{\|}{C}}-R^1 , \text{ and } \qquad \begin{array}{l} -CHCO_2R^1 \\ \;\;| \\ \;\;CH_2CO_2R^1 \end{array}$$

where Z is selected from the group consisting of S, $R^2$, SR, and $-(S)_bSn(R^2)_c(SR)_{3-c}$ where b, c, and d are 1 or 2, and n is an integer from 2 to 1000.

5. The composition of Claim 3 wherein the R group of the aliphatic mercaptan is selected from the group consisting of

$$-CH_2\overset{O}{\overset{\|}{C}}-OR^1 , \qquad -CH_2CH_2\overset{O}{\overset{\|}{C}}-OR^1 ,$$

$$-CH_2CH_2O\overset{O}{\overset{\|}{C}}R^1 , \text{ and } \qquad \begin{array}{l} -CHCO_2R^1 \\ \;\;| \\ \;\;CH_2CO_2R^1 \end{array}$$

6. The composition of Claim 1 where the alkaline earth metal is barium.

7. A polyvinyl chloride composition wherein a heat stabilizer forms from about .05% to about 10% by weight of said polyvinyl chloride, said heat stabilizer comprising of (i) an aliphatic mercaptan and (ii) at least one sulfur-containing organotin compound having a $-\overset{|}{\underset{|}{C}}-Sn-S$ group therein, said composition having a weight ratio of (i) to (ii) ranging between 25:1 and about 1:20 with the proviso that up to 80% of (i) can be replaced by an alkali or alkaline earth metal salt of a mercaptan or mercapto acid.

8. The composition of Claim 7 wherein said heat stabilizer constitutes from about 0.25% to about 5.0% by weight based on said polyvinyl chloride resin.

8446

0124833

European Patent Office

# EUROPEAN SEARCH REPORT

Application number

EP 84 10 4741

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | GB-A-2 076 409 (CIBA-GEIGY AG) * Claims * | 1-8 | C 08 K 5/37<br>C 08 K 5/58<br>C 08 L 27/06 |
| X | EP-A-0 059 614 (CARSTAB CORP.) * Claim 1; examples 1-15 * | 1-8 | |
| X | GB-A-1 349 913 (INTERSTAB LTD.) * Claims * | 1-8 | |
| Y,D | US-A-4 115 352 (J. BOHEN) * Claim 1 * | 1,6,7 | |

TECHNICAL FIELDS SEARCHED (Int. Cl. 3)

C 08 K
C 08 L

The present search report has been drawn up for all claims

| Place of search | Date of completion of the search | Examiner |
|---|---|---|
| THE HAGUE | 10-08-1984 | HOFFMANN K.W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document